# EUROPEAN PATENT APPLICATION

(11) **EP 1 008 613 A2**
(43) Date of publication of application: **14.06.2000**
(21) Application number: 99309736.9
(22) Date of filing: 03.12.1999
(51) Int. Cl.: C08G 77/38, C08L 83/04

(54) **Process for preparing room temperature vulcanizing silicone compositions**

(30) Priority: 10.12.1998 US 209192
(71) Applicant: DOW CORNING CORPORATION, Midland Michigan 48686-0994 (US)
(72) Inventor: Altes, Michael Gene, Midland, Michigan 48642 (US); Jensen, Jary David, Midland, Michigan 48642 (US); Lecomte, Jean-Paul H.J.A., 1160 Brussels (BE); Spodarek, Robert, 4870 Troozbelgium (BE); Walkowiak, Jeff Alan, Bay City, Michigan 48708 (US)
(74) Representative: Kyle, Diana

(57) **Abstract**

A process is disclosed for preparing room temperature vulcanizing (RTV) silicone compositions which when exposed to moisture crosslink to form elastomers. The process comprises the steps of (i) feeding into an axial flow mixing turbine, starting materials comprising (A) 100 parts by weight of polydiorganosiloxanes, (B) 3 to 15 parts by weight of a silane, (C) 45 to 250 parts by weight of a filler and (D) 0.01 to 5 parts by weight of a catalyst; where the axial flow mixing turbine comprises a casing (1) having a proximal end (7) and a distal end (8), a shaft (2) positioned along the casing's longitudinal axis having a blade (3) which rotates in a direction perpendicular to the longitudinal axis of the casing, starting material feed openings (4, 5) installed at the proximal end (7) of the casing so that the starting materials flow toward the blade (3) and a discharge opening (6) positioned at the distal end (8) of the casing so as to discharge mixed materials; (ii) mixing (A), (B), (C) and (D) by rotation of the blade at a rotational speed to produce a homogeneous mixture having entrained gasses and volatiles; (iii) introducing the mixture formed by (ii) into a vacuum-equipped degassing apparatus; and (iv) degassing and removing volatiles from the mixture.

## Description

A process for preparing room temperature vulcanizing (RTV) silicone compositions which when exposed to moisture crosslink to form elastomers. The process comprises the steps of (i) feeding into an axial flow mixing turbine, starting materials comprising (A) 100 parts by weight of polydiorganosiloxanes, (B) 3 to 15 parts by weight of a silane, (C) 5 to 250 parts by weight of a filler, and (D) 0.01 to 5 parts by weight of a catalyst; where the axial flow mixing turbine comprises a casing having a proximal end and a distal end, a shaft positioned along the casing's longitudinal axis having a blade which rotates in a direction perpendicular to the longitudinal axis of the casing, starting material feed openings installed at the proximal end of the casing so that the starting materials flow toward the blade and a discharge opening positioned at the distal end of the casing so to discharge mixed materials; (ii) mixing (A), (B), (C) and (D) by rotation of the blade at a rotational speed to produce a homogeneous mixture having entrained gasses and volatiles; (iii) introducing the mixture formed by step (ii) into a vacuum-equipped degassing apparatus; and (iv) degassing and removing volatiles from the mixture.

A two-step process for preparing RTV silicone compositions is described in U.S. Patent 4,737,561. The '561 process, comprises mixing, in a first step, crosslinkable diorgano(poly)siloxanes, filler(s) and either catalyst(s) or crosslinking agent(s) and a part or all of the optional additives to be used in a continuously operating closed mixer. Then in a second step, metering the crosslinking agent and/or catalyst(s) not added in the first step and the remainder of the optional additives to be used into the mixture thus obtained in an oscillating pilgrim-step kneader where the mixture is homogenized and degassed. This patent requires the crosslinker and catalyst be added in separate steps.

A one-step process for preparing RTV silicone compositions is described in EP 0 739 652. The `652 process comprises continuously feeding 100 parts by weight of a diorganopolysiloxane with a viscosity at 25°C. of 0.1 to 500 Pa-s that contains at least 2 silicon-bonded hydroxyl groups or hydrolyzable groups in each molecule; 1 to 30 parts by weight of an organosilane that contains at least 2 silicon-bonded hydrolyzable groups in each molecule or the partial hydrolysis condensate thereof; 1 to 200 parts by weight of an inorganic filler in powder form and 0 to 10 parts by weight of a cure-accelerating catalyst into a continuous mixing apparatus. The continuous mixing apparatus has starting material feed openings installed at its top, a discharge opening installed at its bottom and a rotating disk installed within a casing and the ingredients are therein mixed by the rotation of the rotating disk. The resulting mixture is thereafter continuously introduced into a vacuum mechanism-equipped degassing apparatus in which the water fraction present in the mixture is removed under reduced pressure. Although this patent describes a one step process for making an RTV composition, the resulting composition has poor appearance due to inadequate dispersion of the filler.

For convenience and manufacturing ease, it would be useful to be able to manufacture RTV silicone compositions having improved appearance in a mixer where the crosslinker and catalyst may be added in a single step. An object of the present invention is to prepare RTV silicone compositions having improved appearance in a axial flow mixing turbine where the crosslinker and catalyst are added into the composition in a single step.

The present invention is a process for preparing room temperature vulcanizing (RTV) silicone compositions which when exposed to moisture crosslink to form elastomers. The process comprises the steps of (i) feeding into an axial flow mixing turbine, starting materials comprising (A) 100 parts by weight of polydiorganosiloxanes, (B) 3 to 15 parts by weight of a silane, (C) 5 to 250 parts by weight of a filler and (D) 0.01 to 5 parts by weight of a catalyst; where the axial flow mixing turbine comprises a casing having a proximal end and a distal end, a shaft positioned along the casing's longitudinal axis having a blade which rotates in a direction perpendicular to the longitudinal axis of the casing, starting material feed openings installed at the proximal end of the casing so that the starting materials flow toward the blade and a discharge opening positioned at the distal end of the casing so to discharge mixed materials; (ii) mixing (A), (B), (C) and (D) by rotation of the blade at a rotational speed to produce a homogeneous mixture having entrained gasses and volatiles; (iii) introducing the mixture formed by step (ii) into a vacuum-equipped degassing apparatus; and (iv) degassing and removing volatiles from the mixture.

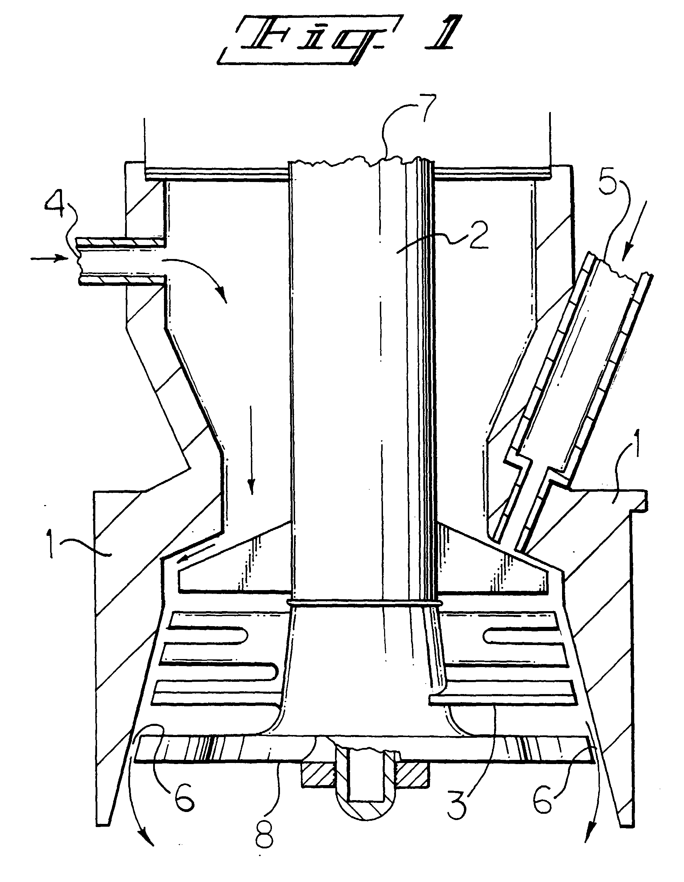

Figure 1 illustrates a cross-sectional view of a preferred embodiment of an axial flow mixing turbine used for preparing RTV silicone compositions. The axial flow mixing turbine comprises a casing (1) having a proximal end (7) and a distal end (8), a shaft 2 positioned along the casing's longitudinal axis having a blade (3) which rotates in a direction perpendicular to the longitudinal axis of the casing, solids starting material feed openings (4) and liquid starting material feed openings (5) installed at the proximal end of the casing so that the starting materials flow toward the blade and a discharge opening (6) formed at the distal end of the casing between the casing wall and the blade.

The present invention is a process for preparing RTV silicone compositions which when exposed to moisture crosslink to form elastomers. The process comprises the steps of
(i) feeding into an axial flow mixing turbine, starting materials comprising (A) 100 parts by weight of polydiorganosiloxanes having on average at least 1.2 chain terminations per molecule described by the formula -SiR¹₂OH or on average at least 1.2 chain terminations per molecule described by the formula -SiR¹ₓY₃₋ₓ, where each R¹ is an independently selected monovalent hydrocarbon radical having 1 to 18 carbon atoms, each Y is independently selected from alkoxy, acyloxy, ketoximo, aminoxy, amido or amino and x is 0 or 1, (B) 3 to 15 parts by weight of a silane described by the formula R¹_{z}SiX_{4-z}, where each R¹ is as defined above; each X is independently selected from alkoxy, acyloxy, ketoximo, aminoxy, amido or amino and z is 0, 1 or 2, (C) 5 to 250 parts by weight of a filler and (D) 0.01 to 5 parts by weight of a catalyst; where the axial flow mixing turbine comprises a casing having a proximal end and a distal end, a shaft positioned along the casing's longitudinal axis having a blade which rotates in a direction perpendicular to the longitudinal axis of the casing, starting material feed openings installed at the proximal end of the casing so that the starting materials flow toward the blade and a discharge opening positioned at the distal end of the casing so to discharge mixed materials;
(ii) mixing (A), (B), (C) and (D) by rotation of the blade at a rotational speed to produce a homogeneous mixture having entrained gasses and volatiles;
(iii) introducing the mixture formed by step (ii) into a vacuum-equipped degassing apparatus; and
(iv) degassing and removing volatiles from the mixture.

Component (A) used in the present process comprises polydiorganosiloxanes having on average at least 1.2 chain terminations per molecule described by the formula (I) or (II). The polydiorganosiloxanes may be linear or branched and may be homopolymers, copolymers or terpolymers. The viscosity of the polydiorganosiloxanes is not critical and the polydiorganosiloxanes may be a single species or a mixture of different polydiorganosiloxanes so long as the polydiorganosiloxanes have on average at least 1.2 chain terminations per molecule described by formula (I) or (II).

The repeating units of the polydiorganosiloxanes of Component (A) are siloxy units such as described by the formula R¹ₛSiO_{(4-s)/2}, where each R¹ is an independently selected monovalent hydrocarbon radical having 1 to 18 carbon atoms; and s is 0, 1 or 2. The monovalent hydrocarbon radicals represented by R¹ may be substituted or unsubstituted. Examples of monovalent hydrocarbon radicals having 1 to 18 carbon atoms include alkyl radicals such as methyl, ethyl, hexyl, 3,3,3-trifluoropropyl, chloromethyl and octadecyl; alkenyl radicals such as vinyl, allyl and butadienyl; cycloalkyl radicals such as cyclobutyl, cyclopentyl and cyclohexyl; cycloalkenyl radicals such as cyclopentenyl and cyclohexenyl; aryl radicals such as phenyl and xylyl; aralkyl radicals such as benzyl; and alkaryl radicals such as tolyl. The preferred polydiorganosiloxanes of Component (A) have repeating units described by the formula -(R¹ₛSiO_{(4-s)/2)f}-, where each R¹ is an independently selected monovalent hydrocarbon radical having 1 to 6 carbon atoms, s is 2 and f is a value such that the polydiorganosiloxanes have a viscosity within a range of 0.5 to 3000 Pas at 25°C. More preferably each R¹ is independently selected from methyl or ethyl and the polydiorganosiloxanes have a viscosity within a range of 5 to 150 Pa·s at 25°C.

The polydiorganosiloxanes of Component (A) have on average at least 1.2 chain terminations per molecule represented by formula (I) ie.-SiR¹₂OH or on average at least 1.2 chain terminations per molecule represented by formula (II) ie. -SiR¹ₓY₃₋ₓ where R¹, Y and x are as defined above. Preferably, the polydiorganosiloxanes of Component (A) have on average at least 1.5 chain terminations per molecule represented by formula (I) or on average at least 1.5 chain terminations per molecule represented by formula (II).

In formulas (I) and (II) each R¹ is an independently selected monovalent hydrocarbon radical having 1 to 18 carbon atoms. Examples of monovalent hydrocarbon radicals represented by R¹ are as described above.

In formula (II) each Y is independently selected from alkoxy, acyloxy, ketoximo, aminoxy, amido or amino. Examples of alkoxy groups include methoxy, ethoxy; iso-propoxy, butoxy, cyclohexoxy, phenoxy, 2-chloroethoxy, 3,3,3-trifluoropropoxy, 2-methoxyethoxy and p-methoxyphenoxy. Examples of acyloxy groups include acetoxy, propionoxy, benzoyloxy and cyclohexoyloxy. Examples of ketoximo groups include dimethylketoximo, methylethylketoximo, methylpropylketoximo, methylbutylketoximo and diethylketoximo. Examples of aminoxy groups include diethylaminoxy, dimethylaminoxy, ethylmethylaminoxy and ethylphenylaminoxy. Examples of amido groups include N-methylacetamido and N-methylbenzamido. Examples of amino groups include -NH₂, dimethylamino, diethylamino, ethylmethylamino, diphenylamino, methylphenylamino and dicyclohexylamino. Preferably, each Y is an independently selected alkoxy group. More preferably, each Y is an independently selected alkoxy group having 1 to 4 carbon atoms.

Subscript x in formula (II) is 0 or 1 and is preferably 0.

In a preferred embodiment for Component (A) when Y is an alkoxy group, a spacer group Z may be bonded to the silicon atom of a chain termination described by formula (II) thereby forming a group described by -Z-SiR¹ₓY₃₋ₓ. Each spacer group Z is independently selected from divalent hydrocarbon radicals having 2 to 18 carbon atoms and a combination of divalent hydrocarbon radicals and siloxane segments described by the formula 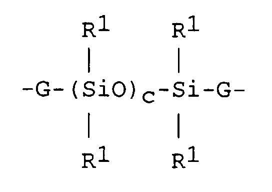 where R¹ is as defined above, each G is an independently selected divalent hydrocarbon radical having 2 to 18 carbon atoms and c is a whole number from 1 to 6.

The divalent hydrocarbon radicals of Z and G may be substituted or unsubstituted. Examples of the divalent hydrocarbon radicals having 2 to 18 carbon atoms of Z and G include alkylene radicals such as ethylene, methylmethylene, propylene, butylene, pentylene, hexylene, 3,3,3-trifluoropropylene, chloromethylene and octadecylene; alkylene radicals such as vinylene, allylene and butadienylene; cycloalkylene radicals such as cyclobutylene, cyclopentylene and cyclohexylene; cycloalkenylene radicals such as cyclopentenylene and cyclohexenylene; arylene radicals such as phenylene and xylylene; aralkylene radicals as benzylene; and alkarylene radicals such as tolylene.

When Z is a combination of divalent hydrocarbon radicals and siloxane segments as described above, each G is preferably an alkylene radical and each G is more preferably an alkylene radical having 2 to 6 carbon atoms. Preferably, Z is a divalent hydrocarbon radical having 2 to 18 carbon atoms. It is more preferred for Z to be an alkylene radical, with an alkylene radical having 2 to 6 carbon atoms being most preferred.

Since the polydiorganosiloxanes of Component (A) are required to have on average at least 1.2 chain terminations per molecule described by formula (I) or (II), some polydiorganosiloxanes may contain other types of chain terminations. Preferably, this other type of chain termination comprises an organosilyl chain termination described by R²₃-Si-, where each R² is an independently selected monovalent hydrocarbon radical having 1 to 18 carbon atoms. Examples of R² are as described above for R¹. Preferably, each R² is an independently selected monovalent hydrocarbon radical having 1 to 8 carbon atoms. More preferably, each R² is independently selected from methyl, ethyl, vinyl and phenyl. Examples of organosilyl chain terminations include trimethylsilyl, triethylsilyl, vinyldimethylsilyl and vinylmethylphenylsilyl.

The polydiorganosiloxanes of Component (A) having on average at least 1.2 chain terminations per molecule represented by formula (I) and (II) useful in the present process are well known in the art and are illustrated by U.S. Patents 3,151,099; 3,161,614; 3,175,993; 3,334,067; 4,871,827; 4,657,967; 4,898,910; 4,956,435; 4,973,623; 3,817,909; 3,996,184; 4,822,830 and 3,077,465.

Preferred polydiorganosiloxanes within the scope of Component (A), are described, for example, by the formula 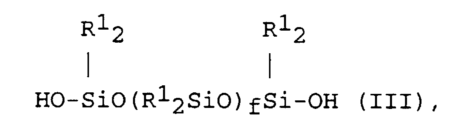 and by mixtures of polydiorganosiloxanes described by formula (III) and polydiorganosiloxanes described by formula 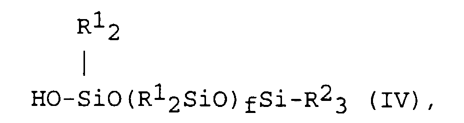 where R¹, R² and f are as defined above.

Other preferred polydiorganosiloxanes within the scope of Component (A), are described, for example, by the formula 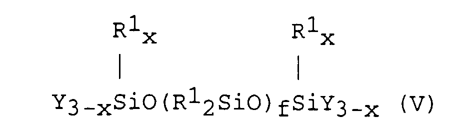 and by mixtures of the polydiorganosiloxanes described by formula (V) and polydiorganosiloxanes described, for example, by the formula 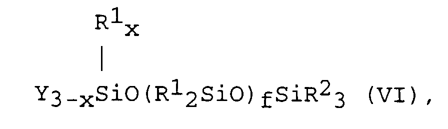 where R¹, R², x and f are as defined above and each Y is an independently selected alkoxy group.

More preferred polydiorganosiloxanes within the scope of Component (A), include those described for example, by the formula 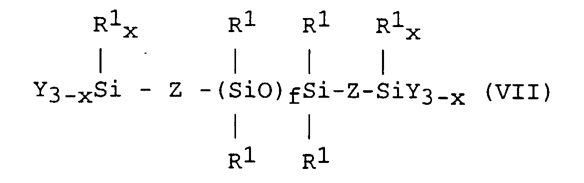 and mixtures of the polydiorganosiloxanes described by formula (VII) and polydiorganosiloxanes described, for example, by the formula 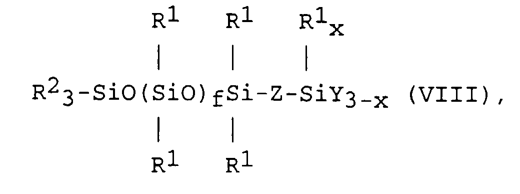 where R¹, R², Z, x and f are as defined above and each Y is an independently selected alkoxy group.

When Component (A) comprises mixtures of polydiorganosiloxanes described by formulas (III) and (IV), (V) and (VI) or (VII) and (VIII), typically the polydiorganosiloxanes described by formula (IV), (VI) and (VIII) respectively will be present in an amount such that 40 percent or less of the chain terminations of Component (A) will be organosilyl chain terminations and preferably such that less than 25 percent of the chain terminations of Component (A) are organosilyl chain terminations.

Component (B) used in the present process is a silane described by formula R¹_{z}SiX_{4-z}, where each R¹ is an independently selected monovalent hydrocarbon radical having from 1 to 18 carbon atoms; each X is independently selected from alkoxy, acyloxy, ketoximo, aminoxy, amido or amino and z is 0, 1 or 2.

Examples of the hydrocarbon radicals represented by R¹ are as described above.

Examples of the alkoxy, acyloxy, ketoximo, aminoxy, amido and amino groups represented by X include those described above for Y. Preferably, each X is independently selected from alkoxy or acyloxy. More preferably, each X is independently selected from alkoxy groups having 1 to 8 carbon atoms or acyloxy groups having 2 to 8 carbon atoms. Most preferably, each X is independently selected from alkoxy groups having 1 to 4 carbon atoms and acyloxy groups having 2 to 4 carbon atoms.

Subscript z can be 0, 1 or 2. Preferably z is 1 or 2 with 1 being most preferred.

Component (B) is specifically exemplified by silanes such as methyltrimethoxysilane, vinyltriethoxysilane, vinylmethyldiethoxysilane, methyltri(methylethylketoximo)silane, isobutyltrimethoxysilane, vinyltri-(methylethylketoximo)silane, phenyltri(methylethylketoximo)silane, methyltriacetoxysilane, vinyltriacetoxysilane, phenyltriacetoxysilane, dimethyldiacetoxysilane, methylethoxydiacetoxysilane, methyltri(N,N-diethylaminoxy)silane, vinyltri(N,N-diethylaminoxy)silane, vinyltri(N-cyclohexylamino)silane, vinyltri(N-methylacetamido)silane, tetraacetoxysilane and tetra(methylketoximo)silane. The partial hydrolyzates of these silanes can also be used in the present process.

The amount of silane useful in the RTV silicone compositions prepared by the present process is from 3 to 15 parts by weight based on the weight of Component (A), with 5 to 8 parts by weight on the same basis being preferred. The silane may be a single species or a mixture of two or more species.

Component (C) used in the present process is a filler which is selected from those known to be useful in RTV silicone sealants. The fillers include ground, precipitated and colloidal calcium carbonates which are untreated or treated with compounds such as stearate or stearic acid; reinforcing silicas such as fumed silicas, precipitated silicas, silica gels and hydrophobed silicas and silica gels; crushed quartz, ground quartz, alumina, aluminum hydroxide, titanium dioxide, diatomaceous earth, iron oxide, carbon black and graphite. Silica and calcium carbonate are each preferred fillers, in particular fumed silica and precipitated calcium carbonate.

The amount of filler added depends upon the physical properties desired for the RTV silicone compositions. The amount of filler useful in the RTV silicone compositions prepared by the present process is from 5 to 250 parts by weight based on 100 parts by weight of Component (A). Preferably, the filler is added in amounts from 8.5 to 150 parts by weight on the same basis. The filler may be added as a single species or as a mixture of two or more species.

Component (D) used in the present process is a catalyst effective for facilitating the room temperature vulcanizing of the composition. Catalysts useful for curing the silicone sealant mixtures are dependent upon the reactive groups on Components (A) and (B) and include compounds such as metal carboxylates, including iron octoate, cobalt octoate, manganese octoate, tin naphthenate and tin octoate; organotin compounds, such as dibutyltin acetate, dibutyltin octoate and dibutyltin dilaurate; titanium compounds such as tetraalkyltitanates including tetraisopropyltitanate, tetra-n-butyltitanate, tetraoctyltitanate, tetra-tertiary-butyltitanate and tetra-tertiary-amyltitanate; titanate chelates including dialkoxyacetylacetonate titanate chelate and dialkoxyethylacetoacetate titanate chelate, where the alkoxy group includes isopropoxy or isobutoxy or organosiloxytitanium compounds; zirconium alkoxides and chelates; and alkoxyaluminum compounds. It is preferred to use organotin compounds or titanium compounds. It is more preferred to use organotin compounds when acyloxy groups are present in the composition and it is preferred to use a tetraalkyltitanate or titanate chelate when alkoxy groups are present in the composition.

The amount of catalyst useful in the RTV silicone compositions prepared by the process of the present invention is from 0.01 to 5 parts by weight based on 100 parts by weight of Component (A). Preferably, the catalyst is added in amounts from 0.025 to 3 parts by weight on the same basis. The catalyst may be a single species or a mixture of two or more species.

Other ingredients which are conventionally used in RTV silicone compositions such as adhesion promoters, rheology additives, fungicides, colorants, pigments and plasticizers can also be added in the present process.

In the present process, appropriate amounts of Components (A)-(D) and any desired additional ingredients are fed into an axial flow mixing turbine comprising a casing having a proximal end and a distal end, a shaft positioned along the casing's longitudinal axis having a blade which rotates in a direction perpendicular to the longitudinal axis of the casing, starting material feed openings installed at the proximal end of the casing so that the starting materials flow toward the blade and a discharge opening positioned at the distal end of the casing so to discharge mixed materials. The starting materials are then mixed by rotation of the blade at a rotational speed to produce a homogeneous mixture having entrained gasses and volatiles.

Suitable axial flow mixing turbines for the present process are as described in U.S. Patent 4,737,561 which comprises a casing having a proximal end and a distal end, a shaft positioned along the casing's longitudinal axis having a blade which rotates in a direction perpendicular to the longitudinal axis of the casing, starting material feed openings installed at the proximal end of the casing so that the starting materials flow toward the blade and a discharge opening positioned at the distal end of the casing so to discharge mixed materials. A single stage or multi-stage mixing turbine may be used. A preferred axial flow mixing turbine for use in the present process is a single stage axial flow mixing turbine manufactured by Buss AG (MT-170, Hohenrainstrasse 10; CH-4133 Pratteln 1; Switzerland).

The casing of the axial flow mixing turbine has a proximal end and a distal end. The casing may be corrosion resistant and have a clam-shell type structure allowing for ease of cleaning. The casing may also be jacketed for cooling.

A shaft is positioned along the casing's longitudinal axis having a blade which rotates in a direction perpendicular to the longitudinal axis of the casing. Preferably, the shaft is centrally positioned along the casing's longitudinal axis. The blade may have various geometries and configurations so to create the desired mixing zone.

Starting material feed openings are installed at the proximal end of the casing so that the starting materials flow toward the blade. The blade is operated at a rotational speed to form a homogeneous mixture having entrained gasses and volatiles which is discharged from the mixer through a discharge opening positioned at the distal end of the casing. A rotational speed is that speed at which a homogeneous mixture is formed. Preferably, the blade is operated at a rotational speed from 500 to 4000 rpm. More preferably, the blade is operated at a rotational speed from 2000 to 3250 rpm. The flow and mixing of the starting materials may also be affected by the gap width. The gap width should enable the starting materials to be mixed by the blade and then flow through the mixer to the discharge opening positioned at the distal end of the casing. As used herein, the term "gap width" means the distance between the tip of the blade and the casing of the mixing turbine. A preferred gap width is in the range from 1 to 11 mm and more preferably is in the range from 2.5 mm to 6.5 mm.

The starting materials are fed to the starting material feed openings by conventional means such as piston, gear or lobe pumps for liquid starting materials and loss-in-weight feeders for solid starting materials.

The homogeneous mixture having entrained gasses and volatiles is then introduced into a vacuum-equipped degassing apparatus where degassing and removal of volatiles occurs under reduced pressure. Recovery of the degassed and devolatized mixture is then accomplished by conventional means such as transferring into pails, drums, bulk containers or cartridges.

No specific restrictions apply to the vacuum-equipped degassing apparatus employed here and the process can use those apparatuses already known for the vacuum removal of gases and volatiles present in liquids and pastes. Suitable vacuum-equipped degassing apparatus are exemplified by single screw extruders such as Baker-Perkins rotofeed extruders manufactured by B&P Process Equipment and Systems, Saginaw, MI; batch mixers, manufactured by Turello Corp., Spilimbergo, Italy or Charles Ross and Son Company, Hauppauge, NY; single-screw and twin-screw extruders, manufactured by Welding Engineer Inc., Blue Bell, PA or Krupp Werner & Pfleiderer, Ramsey NJ. The homogeneous mixture having entrained gasses and volatiles is introduced into the vacuum-equipped degassing apparatus by conventional means such as a pump, including gear pumps, piston pumps, peristaltic pumps, gravity flow pumps or progressive cavity pumps.

There is no limitation as to the temperature the present process may be operated, however preferably it is operated at temperatures from 60°C. to 150°C. and more preferably it is operated at temperatures from 80°C. to 135°C. The present process may be operated as a continuous or semi-continuous process with continuous processing being preferred.

The present process is further illustrated by the following examples which are presented for that purpose and are not intended to limit the scope of the claims herein. As used in the examples, "pbw" means parts by weight and viscosities are as measured at 25°C. Modulus, tensile and elongation were measured using ASTM D412 and durometer was measured using ASTM 2240.

### Example 1

The following ingredients were added at 20-25°C. and continuously compounded using either an axial flow mixing turbine (MT-170, Buss AG, Hohenrainstrasse 10; CH-4133 Pratteln 1; Switzerland) or a flow jet mixer (FJM-300, Funken Co. Ltd., Tokyo, Japan). 100 pbw triethoxysilylethylene endblocked polydimethylsiloxane polymer with a viscosity of 110 Pa·s, 18.6 pbw trimethylsilyl terminated polydimethylsiloxane having a viscosity of 0.1 Pas, 8.57 pbw methyltrimethoxy-silane, 3.93 pbw tetra-t-butyltitanate, 14.3 pbw fumed silica with an apparent bulk density of approximately 120 grams/liter and 1.43 pbw silicone glycol fluid were continuously metered at a total rate of 100 kg/hr into each mixer and discharged to a drum. Outlet temperature for sealants compounded in the mixing turbine was 110°C. and 108°C. for sealants compounded in the flow jet mixer.

For both mixers, process conditions were selected to achieve optimal filler dispersion. For the axial flow mixing turbine, the rotational speed was 3000 rpm (linear velocity = 62.5 m/sec.) with a gap width of 2.5 mm. For the flow jet mixer, the rotational speed was 900 rpm (linear velocity = 25.4 m/sec) with a gap width of 15 mm.

Periodically, samples were collected and entrained gasses and volatiles were removed by mixing under vacuum (68kPa to 95kPa) for five to ten minutes in a small change can mixer. Then 2 mm thick slabs were cured for 7 days at 20-25°C. and 50±5% relative humidity, evaluated for appearance and physical properties tested.

Since the dispersion of filler affects the appearance of sealants, the appearance of each sealant was evaluated by assessing filler dispersion. The cured slabs were placed on a lighted surface which projected an image onto a screen. Filler dispersion was determined by counting the number of undispersed filler agglomerates, identified as dark spots on the projection, for a given area. Results provided in Table 1A show that sealant compounded on the mixing turbine had a reduced number of undispersed filler agglomerates compared to sealant compounded on a flow jet mixer. Physical property testing is provided in Table 1B.

**Table 1A:**

| Comparison of Undispersed Filler Agglomerates Using Mixing Turbine and Flow Jet Mixer | |
|---|---|
| Mixer | Number of undispersed agglomerates per given area |
| Mixing Turbine | 30 |
| Flow Jet Mixer* | 120 |

| | |
|---|---|
| *Comparative Example | |

**Table 1B:**

| Physical Properties of Cured Sealants | | | | |
|---|---|---|---|---|
| Mixer | 100% Modulus (MPa) | Ult. Tensile (MPa) | Ult. Elong. (%) | Durometer (Shore A) |
| Mixing Turbine | 0.41 | 1.48 | 377 | 13 |
| Flow Jet | 0.39 | 1.37 | 374 | 13 |

### Example 2

The same ingredients as described in Example 1, except the viscosity of the polymer was 60 Pa·s and the density of the silica was 80 g/liter, were continuously compounded, cured and tested as described in Example 1. Outlet temperature for sealants compounded in the mixing turbine was 110°C. and 96°C. for sealants compounded in the flow jet mixer. Results provided in Table 2A demonstrate that the sealant compounded on the mixing turbine had a reduced number of undispersed filler agglomerates compared to sealant compounded on a flow jet mixer. Physical property testing is provided in Table 2B.

**Table 2A:**

| Comparison of Undispersed Filler Agglomerates Using Mixing Turbine and Flow Jet Mixer | |
|---|---|
| Mixer | Number of undispersed agglomerates per given area |
| Mixing Turbine | 10 |
| Flow Jet* | 50 |

| | |
|---|---|
| *Comparative Example | |

**Table 2B:**

| Physical Property Testing | | | | |
|---|---|---|---|---|
| Mixer | 100% Modulus (MPa) | Ult. Tensile (MPa) | Ult. Elong. (%) | Durometer (Shore A) |
| Mixing Turbine | 0.33 | 1.04 | 379 | 8 |
| Flow Jet | 0.44 | 1.08 | 309 | 12 |

### Example 3

The following ingredients were added at 20-25°C. and continuously compounded using either an axial flow mixing turbine or a flow jet mixer. 100 pbw of a mixture of polydimethylsiloxanes where one type of polymer is described by the formula 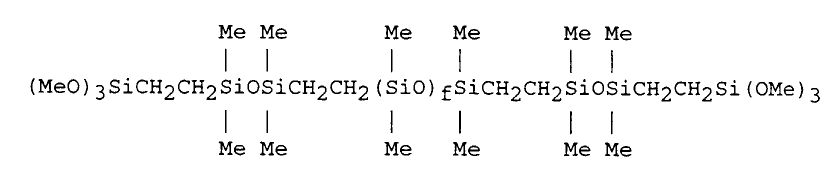 and another type of polymer is described by the formula 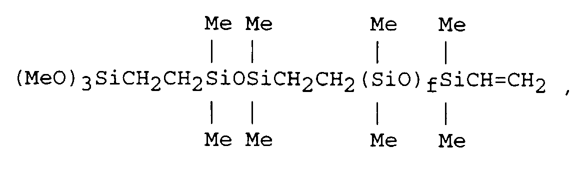 where in the polymer mixture 20 percent of the chain terminations are organosilyl chain terminations and f had an average value such that the polymer mixture's overall viscosity was 65 Pas, 5.6 pbw methyltrimethoxysilane, 1.5 pbw diisopropoxy bis(ethyl acetoacetate) titanate, 0.43 pbw tetra-n-butyltitanate, 73 pbw precipitated calcium carbonate, 0.25 pbw 3-mercaptopropyltrimethoxysilane and 0.2 pbw ethylenediaminepropyltrimethoxysilane were continuously metered at a total rate of 100 kg/hr into each mixer and discharged to a drum. Outlet temperature for sealants compounded in the mixing turbine was 134°C. and 97°C. for sealants compounded in the flow jet mixer.

For both mixers, process conditions were selected to achieve optimal filler dispersion. For the axial flow mixing turbine, the mixer rotational speed was 2000-3000 rpm (linear velocity = 41.7 - 62.5 m/sec.) with a gap width of 2.5 mm; for the flow jet mixer, the mixer rotation speed was 900 - 1200 rpm (linear velocity = 25.4 - 33.8 m/sec) with a gap width of 15 mm.

Periodically, samples were collected and entrained gasses and volatiles were removed by mixing under vacuum (68kPa to 95kPa) for five to ten minutes in a small change can mixer. Then 2 mm thick slabs were cured for 7 days at 20-25°C. and 50±5% relative humidity, evaluated for appearance and physical properties tested. Appearance was rated on a numerical scale with ratings defined as follows:
1. Excellent appearance, smooth surface with no evidence of graininess or filler agglomerates.
2. Good appearance, occasional agglomerate or minor graininess observed.
3. Fair appearance, some agglomerates or graininess observed on the surface
4. Poor appearance, significant graininess observed on the surface or numerous agglomerates
5. Bad appearance, entire surface characterized by graininess or filler agglomerates

For the axial flow mixing turbine, compounded sealant exhibiting appearance ratings ranging from 1 to 2 on the preceding scale were achieved. For the flow jet mixer, the compounded sealant had appearance ratings of 4 to 5 on the preceding scale. Physical property testing is provided in Table 3.

**Table 3:**

| Physical Property Testing | | | | |
|---|---|---|---|---|
| Mixer | 100% Modulus (MPa) | Ult. Tensile (MPa) | Ult. Elong. (%) | Durometer (Shore A) |
| Mixing Turbine | 0.67 | 2.4 | 407 | 25 |
| Flow Jet | 0.83 | 2.2 | 337 | 32 |

### Example 4

The following ingredients were added at 20-25°C. and continuously compounded using either an axial flow mixing turbine or a flow jet mixer. 100 pbw of a polydimethylsiloxane (85% hydroxyl endblocked/15% trimethyl endblocked) with a viscosity of 17 Pas, 5.24 pbw 50/50 weight percent blend of methyltriacetoxysilane and ethyltriacetoxysilane, 11.7 pbw fumed silica and 0.0263 pbw dibutyltindiacetate were continuously metered at a total rate of 100 kg/hr into each mixer and discharged to a drum. Outlet temperature for sealants compounded in the mixing turbine was 102°C. and 67°C. for sealants compounded in the flow jet mixer.

For both mixers, process conditions were selected to achieve optimal filler dispersion. For the axial flow mixing turbine, the mixer rotational speed was 1000 - 3000 rpm (linear velocity = 20.8 - 62.5 meters/sec.) with a gap width of 2.5 mm; for the flow jet mixer, the mixer rotation speed was 900 rpm (linear velocity = 25.4 meters/sec) with a gap width of 15 mm.

Periodically, samples were collected and entrained gasses and volatiles were removed by mixing under vacuum (68kPa to 95kPa) for five to ten minutes in a small change can mixer. Then 2 mm thick slabs were cured for 7 days at 20-25°C. and 50±5% relative humidity, evaluated for appearance and physical properties tested. Appearance was rated on a numerical scale with ratings defined in Example 3. For the axial flow mixing turbine, compounded sealant exhibiting appearance ratings ranging from 2 to 3 on the preceding scale were achieved. For the flow jet mixer, the compounded sealant had appearance ratings of 4 on the same scale. Physical property testing is provided in Table 4.

**Table 4:**

| Physical Property Testing | | | | |
|---|---|---|---|---|
| Mixer | 100% Modulus (Mpa) | Ult. Tensile (MPa) | Ult. Elong. (%) | Durometer (Shore A) |
| Mixing Turbine | 0.56 | 2.1 | 453 | 30 |
| Flow Jet | 0.59 | 2.02 | 406 | 26 |

## Claims

1. A process for preparing RTV silicone compositions which when exposed to moisture crosslink to form elastomers comprising the steps of
(i) feeding into an axial flow mixing turbine, starting materials comprising (A) 100 parts by weight of one or more polydiorganosiloxanes having on average at least 1.2 chain terminations per molecule of formula -SiR¹₂OH or on average at least 1.2 chain terminations per molecule of formula -SiR¹ₓY₃₋ₓ, where each R¹ is an independently selected monovalent hydrocarbon radical having 1 to 18 carbon atoms, each Y is independently alkoxy, acyloxy, ketoximo, aminoxy, amido or amino and x is 0 or 1, (B) 3 to 15 parts by weight of a silane of formula R¹_{z}SiX_{4-z}, where each R¹ is as defined above; each X is independently alkoxy, acyloxy, ketoximo, aminoxy, amido or amino and z is 0, 1 or 2, (C) 5 to 250 parts by weight of a filler, and (D) 0.01 to 5 parts by weight of a catalyst; where the axial flow mixing turbine comprises a casing (1) having a proximal end (7) and a distal end (8), a shaft (2) positioned along the casing's longitudinal axis having a blade (3) which rotates in a direction perpendicular to the longitudinal axis of the casing, starting material feed openings (4, 5) installed at the proximal end of the casing so that the starting materials flow toward the blade (3) and a discharge opening (6) positioned at the distal end of the casing so as to discharge mixed materials;
(ii) mixing (A), (B), (C) and (D) by rotation of the blade at a rotational speed to produce a homogeneous mixture having entrained gasses and volatiles;
(iii) introducing the mixture formed by step (ii) into a vacuum-equipped degassing apparatus; and
(iv) degassing and removing volatiles from the mixture.

2. The process according to claim 1, where the polydiorganosiloxanes of (A) have the formula 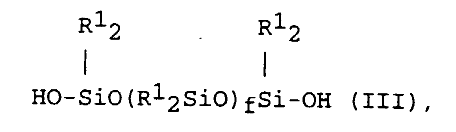 or are mixtures of the polydiorganosiloxanes of formula (III) as just defined and polydiorganosiloxanes of formula 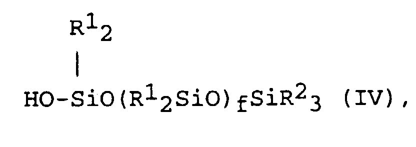 where each R¹ is as defined in claim 1, each R² is an independently selected monovalent hydrocarbon radical having 1 to 18 carbon atoms and f is a value such that the polydiorgansoiloxanes have a viscosity within a range of 0.5 to 3000 Pa·s at 25°C.

3. The process according to claim 2, in which each R¹ is an independently selected monovalent hydrocarbon radical having 1 to 6 carbon atoms and each R² is an independently selected monovalent hydrocarbon radical having 1 to 8 carbon atoms.

4. The process according to claim 3, in which each R¹ is independently methyl or ethyl, each R² is independently methyl, ethyl, vinyl or phenyl; and f is a value such that the polydiorganosiloxanes have a viscosity within a range of 5 to 150 Pa·s at 25°C.

5. The process according to claim 1 where the polydiorganosiloxanes of (A) have the formula 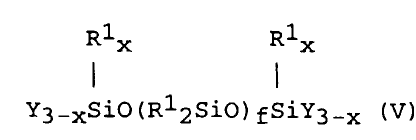 are mixtures of the polydiorganosiloxanes of formula (V) as just defined and polydiorganosiloxanes of formula 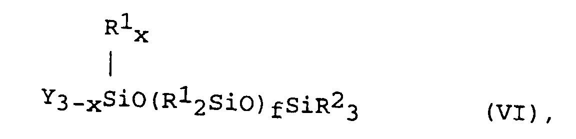 where each R² is an independently selected monovalent hydrocarbon radical having 1 to 18 carbon atoms; f is a value such that the polydiorganosiloxanes have a viscosity within a range of 0.5 to 3000 Pa·s at 25°C.; and each Y is an independently selected alkoxy group.

6. The process according to claim 5, in which each R¹ is an independently selected monovalent hydrocarbon radical having 1 to 6 carbon atoms and each R² is an independently selected monovalent hydrocarbon radical having 1 to 8 carbon atoms.

7. The process according to claim 6,in which each R¹ is independently selected from methyl or ethyl, each R² is independently selected from methyl, ethyl, vinyl or phenyl; f is a value such that the polydiorganosiloxanes have a viscosity within a range of 5 to 150 Pas at 25°C.; and each Y is an independently selected alkoxy group having 1 to 4 carbon atoms.

8. The process of claim 1 where the polydiorganosiloxanes of (A) have the formula 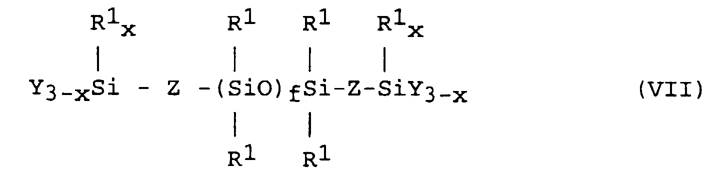 or are mixtures of the polydiorganosiloxanes of formula (VII) as just defined and polydiorganosiloxanes of the formula 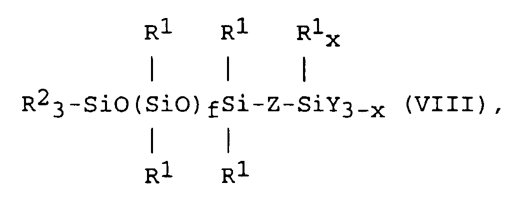 where each R² is an independently selected monovalent hydrocarbon radical having 1 to 18 carbon atoms; f is a value such that the polydiorganosiloxanes have a viscosity within a range of 0.5 to 3000 Pa-s at 25°C.; each Y is an independently selected alkoxy group; and each Z is independently selected from divalent hydrocarbon radicals having 2 to 18 carbon atoms and a combination of divalent hydrocarbon radicals and siloxane segments of formula 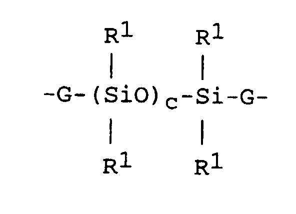 where each G is an independently selected divalent hydrocarbon radical having 2 to 18 carbon atoms and c is an integer from 1 to 6.

9. The process according to claim 8, in which each Z is an independently selected divalent hydrocarbon radical having 2 to 18 carbon atoms.

10. The process according to claim 9, in which each R¹ is independently methyl or ethyl, each R² is independently methyl, ethyl, vinyl or phenyl; f is a value such that the polydiorgansiloxanes have a viscosity within a range of 5 to 150 Pa·s at 25°C.; each Y is an independently selected alkoxy group having 1 to 4 carbon atoms; and each Z is an independently selected alkylene radical.

11. The process according to claim 3, where each X is an independently selected acyloxy group having 2 to 8 carbon atoms.

12. The process according to claim 4, where each X is an independently selected acyloxy group having 2 to 4 carbon atoms and the catalyst is an organotin

14. The process according to claim 10 where each X is an independently selected alkoxy group having 1 to 4 carbon atoms and the catalyst is a titanium compound.

15. The process according to any of claims 1 to 4 where the rotational speed of the blade is from 500 to 4000 rpm and there is a gap width from 1 to 11 mm.

16. The process according to claim 15 where the rotational speed of the blade is from 2000 to 3250 rpm and there is a gap width from 2.5 to 6.5 mm.

17. The process according to claim 1 where the process is operated in a continuous manner.
